# EUROPEAN PATENT SPECIFICATION

(11) **EP 3 847 208 B1**
(45) Date of publication and mention of the grant of the patent: **08.10.2025**
(21) Application number: 19790030.1
(22) Date of filing: 09.09.2019
(51) Int. Cl.: C08J 9/08, C08J 9/30

(54) **A POROUS FORMABLE SEEDBED AND A METHOD FOR PRODUCING IT**
PORÖSES FORMBARES SAATBETT UND VERFAHREN ZUR HERSTELLUNG DAVON
LIT DE SEMENCE POREUX FORMABLE ET SON PROCÉDÉ DE PRODUCTION

(30) Priority: 07.09.2018 FI 20185749
(43) Date of publication of application: 14.07.2021
(73) Proprietor: Fifth Innovation Oy, 33880 Lempäälä (FI)
(72) Inventor: HILLI, Tuomo, 33500 Tampere (FI)
(74) Representative: Laine IP Oy
(86) International application number: PCT/FI2019/050643
(87) International publication number: WO 2020/049227

(56) References cited:
- WO-A1-2011/061400
- WO-A1-2018/085918
- DE-A1- 102004 031 078
- US-A- 3 894 878

## Description

### Field of the Invention

The present invention relates to porous formable biomaterial-based seedbeds, their production and their use.

In particular, the invention concerns a method for producing a porous formable seedbed according to the preamble of claim 1, and to a product obtained by such a method.

The invention also concerns a porous seedbed according to claim 15.

### Description of Related Art

The problem with agriculture in general is the lack of germination of seeds, particularly in challenging conditions, such as in sand, desert and other conditions where water is scarce, and in cold areas. After the possible germination of seeds, insufficient growth usually becomes a problem for example due to poor nutritional conditions.

Earlier, some seedbeds made of minerals or fibers have been used as seedbeds. The foam product is watered and seeds are placed inside it. Most commonly, cellulose or rock wool has been used, which wool is relatively inexpensive and has stable properties. However, such materials are unecological and expensive to produce. Thus, there is need to find an ecological seedbed for seeds in the above described challenging conditions for agriculture, in which conditions soil has for example a poor water retention capacity, is poor in nutrients or cold conditions prevails in the area.

A new subdivision of cultivation has become a so-called vertical or three-dimensional cultivation which aims at more efficient use of space compared to the traditional horizontal cultivation. In vertical cultivation seedbeds are upright and this also poses new challenges for the seedbeds. Thus, new solutions which can be placed in any position or formed into any shape offer considerably more possibilities. In addition, a material with a self-standing ability and biomass without a separate support structure significantly reduces costs.

Patent publication JPH06113669 describes a seedbed with a good water retention capacity, as a raw material of which seedbed is used mainly pulp and biodegradable thickener. The seedbed is formed by kneading the pulp, the biodegradable thickener, the degradable foaming agent and water. In addition, desired seeds are added to the mixture. The mixture is placed in a mold, thermally foamed and the foamed product is dried.

When selecting the raw material for a porous seedbed, it is important to consider the desired pore structure and total surface area of the final product, and the void between the ingredients, and of course the cost of the raw material. Generally, porous carbon materials are described for example in publications W2018/085918, US 3894878 and DE102004031078.

There is room for improvements in the properties and, especially in formability of porous seedbeds and in used starting material. In particular, use of ecological starting materials should be enhanced and utilization of industrial by-products further increased. Nor have any of the starting materials succeeded in optimizing all the beneficial properties at the same time as being environmentally friendly and inexpensive. The desired properties are good water retention and heat insulation, relatively low density and mechanical strength.

### General Description of the Invention

It is an object of the present invention to provide a new kind of method for producing porous formable seedbeds from bio-based starting materials. In particular, it is an object to provide a method for producing seedbeds by using ecological and inexpensive starting material which nevertheless possess the necessary physical and chemical properties for the use.

In particular, it is an object of the invention to provide a method which can be used to produce seedbeds from lignocellulose-based starting material.

It is also an object of the invention to provide new kind of formable seedbed.

In the method according to the invention, a mixture containing liquid medium is formed from a lignin-containing fraction obtained from biomass fractionation, into which mixture is also possibly added other fractions resulting from the biomass fractionation. The formed mixture is foamed and formed in a mold into a pre-determined shape. Thus obtained formed foam is subjected to a heat treatment, which after it can be optionally carbonized and finally activated.

As described, foamed biomass-based seedbeds are provided, which seedbeds are suitable for use as seedbed for a wide variety of seeds and seedlings.

More specifically, the invention is characterized by what is stated in the characterizing part of the independent claims.

Considerable advantages are achieved by the invention. Thus, the method provides self-standing monolithic, porous structures which are suitable as seedbeds into which it is easy to contain nutrients and trace elements. In addition, there is provided porous formed seedbeds which are carbonized and activated throughout.

Most suitably, the foaming of the invention occurs at normal pressure and at room temperature. However, the foaming may also be performed under a reduced pressure or an overpressure, for example at an absolute pressure of 0.1 to 10 bar. When the mixture is foamed without external heating, foaming can be better controlled and foam objects of uniform quality are obtained.

A wide variety of lignocellulose-based raw materials, such as various plants and parts thereof, side fractions of different fractionation processes, and digestate from peat and biogas plants and other partially biodegraded or processed materials, can be used as starting material for the invention. The bio-based raw materials used in the invention reduce the need for fossil raw materials and decrease the carbon footprint of the product. Thus, it is possible to utilize cheaper, unrefined starting materials or purified raw materials, or combine these, in the method of the invention. Thus, also the side fractions of fractionation process can be utilized.

The production method of the invention has the additional benefit of being environmentally friendly, involving simple technology and having low energy consumption. Energy consumption can be reduced by harnessing the energy of the gas streams used in the various process steps by recovering it and utilizing it for example in pre-heating. In addition, the volatile components used for foaming can be recycled by condensation and reuse. The volatile fractions resulting from the carbonization step can also be utilized as an energy source or the heat can be recovered from those by condensation, wherein also these liquid fractions can be utilized in other processes. Non-condensable gases can be burned and thus generated energy can be utilized for example in the process, heating or power generation.

The porous seedbed of the invention also has the benefit of being capable of recycling and reuse. The prepared porous seedbed can be directly regenerated by heating or alternatively crushing, which after it can be used as a raw material of new foam. Biomass, such as stems and roots, grown in the seedbed can also be utilized as a raw material of new foam. Heat treatment carried out during the formation of the new foam also removes possible pathogens contained in the grown biomass, wherein there is no risk of spreading plant diseases. Finally, seedbed can be used as a soil conditioner or it can be burned to produce green energy.

Preferred embodiments of the invention will now be discussed in more detail with reference to the attached drawing. The drawing shows a simplified diagram of the method steps according to one embodiment.

### Drawings

Figure 1 is a block diagram showing the steps of a method according to one embodiment.
Figure 2 shows a diagram of a seedbed into which has been integrated feed of liquids and/or nutrients, according to one embodiment.

### Embodiments

The present invention relates to a porous formable seedbed and a method for producing the same.

The products to be produced will in the following be referred as "seedbed", "object" and "foam object" as being synonyms with each other. It is a three-dimensional seedbed that is porous. After foaming, the seedbed comprises pores which are at least macro-sized. Typically, the smallest dimension of the pores is at least 0.01 mm. As a result of optional activation, a large number of microporous and mesoporous pores are generated in the seedbed.

Most suitably the seedbed is porous throughout, which means that the porous structure extends from the inside of the seedbed to its surface. Most suitably, the porous seedbed is permeable to gases and liquid.

The seedbeds are "monolithic" which in the present context means that their body structure consists of the same material throughout, i.e. the seedbed is "one substance".

The seedbeds are typically mechanically strong and it is possible to produce self-standing seedbeds from the present material. "Self-standing" means that those can be used to form products which do not require a separate body layer or structure.

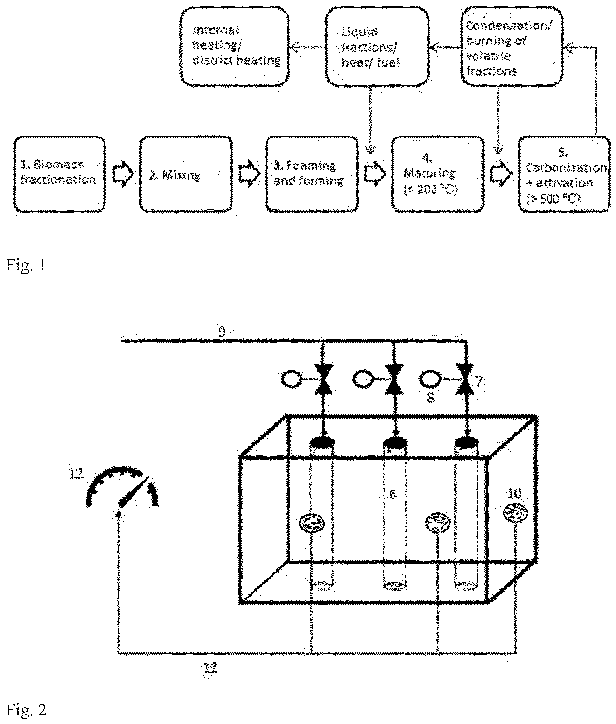

A method according to one embodiment is presented in figure 1.

At the first step of the method (reference 2 of figure 1), a mixture containing liquid medium is formed from a lignin-containing fraction obtained from biomass fractionation 1.

Typically, the lignin-containing fraction is derived from biomass, such as wood or annual or perennial plants. The fraction is obtained for example by extracting the biomass with an aqueous solution, for example by hot water extraction or pressurized hot water extraction or traditional chemical pulp cooking. Most suitably, the aqueous solutions contain lignin-solubilizing components, such as alkali, for example alkali metal or alkaline earth metal hydroxides, carbonates, sulfides, or mixtures thereof. The extraction solutions can also contains peroxides and organic compounds, such as performic acid or Caron's salt. The extraction can also be carried out with organic or ionic solvents.

The liquid medium contained in the mixture acts as a foamer in the mixture. According to one embodiment the liquid medium is water. According to another embodiment the liquid medium can be for example organic solution, such as alcohol, or ionic solution. The liquid medium can also be a mixture of several liquids. By using a liquid medium having a low boiling point, the amount of energy needed for drying of the foam can be reduced.

According to one embodiment the liquid medium used for foaming can be recovered and recycled to be reused.

The lignin can be either untreated or treated or as a mixture thereof. Thus, the lignin can be in any form, such as an alkaline lignin, in a thiol-form or as a metal salt of lignosulfonate.

According to one embodiment, also other fractions obtained from the biomass fractionation 1 are added to the lignin-containing mixture. These fractions may or may not contain lignin. Typically, the fractions to be added contain for example organic components, such as extracts, furfural or tannin, or monomeric, oligomeric or polymeric saccharides, which are derived from cellulose or hemicellulose.

In addition, the fractions to be added can be pure or unrefined. The proportion of each of such fraction can be for example about 0.1 to 25 weight-% of the solids of the mixture to be foamed.

Thus, various side fractions of fractionation process can be effectively utilized in the present invention.

The mixture formed of the fractions of the biomass contains 10 to 80 weight-% lignin, for example 20 to 50 weight-% lignin, calculated from the dry weight of the mixture.

According to one embodiment the mixture formed of the fractions of the biomass contains at least 1 weight-% lignin, preferably at least 5 weight-% lignin, more preferably 10 to 75 weight-% lignin, for example 30 to 50 weight-% lignin, calculated from the total weight of the mixture.

According to one embodiment the formed mixture contains the liquid medium 0.1 to 70 weight-%, preferably 1 to 50 weight-%, more preferably 5 to 30 weight-%, for example about 20 weight-%, calculated from the total weight of the mixture.

Components modifying the properties of the final product according to the application can also be added to the mixture.

Plant growth promoting components, such as nutrients and trace elements, are added to the mixture to be foamed. According to one embodiment these components are added prior to foaming. According to another embodiment these components can also be added in any other method step, such as prior to drying or carbonization, or in several different steps.

As examples a mention can be made of inorganic and organic fertilizer components.

As inorganic components a mention can be made of NPK-containing fertilizer components, such as urea, ammonium nitrate, ammonium sulphate, phosphoric acid derivatives and other phosphates, and potassium salts. Other inorganic additive components are calcium and magnesium-containing powders, such as limestone and dolomite powders.

As organic components a mention can be made of organic fertilizers of animal origin, such as technically processed manure, meat-and-bone meal, hornbeam, blood meal, feather meal, organic fertilizer solution of animal origin, organic fertilizers of non-animal origin, such as organic fertilizer, fungal mass, bacterial biomass, organic fertilizer solution, seaweed powder, seaweed extract, betaine, humus preparation or extract, aqueous solution of alcohols or oil emulsion, plant extract. Further, as organic fertilizer components a use can be made of by-products, such as molasses extract, vinasse and vinasse extract and potato cellular fluid.

In addition to or instead of the above, minerals and trace elements, such as manganese, boron and copper, and selenium and mixtures thereof, can also be included.

Minerals and trace elements can be added as inorganic salts.

Minerals can also be added as organic mineral fertilizers. These include for example organic mineral fertilizer of animal origin, organic mineral fertilizer, organic mineral fertilizer liquid, organic mineral fertilizer liquid of animal origin, meat and bone meal.

In addition to the above, soil improvers, such as peat, soil improvement compost, manure mixtures, fresh compost, vegetable waste compost and treated sewage sludge or digestate, can be added.

The amount of the above mentioned components can be about 0.01 to 70 weight-% of the dry matter of the foamable mixture, typically the amounts are about 0.05 to 30 weight-%, for example about 0.1 to 15 weight-% of the dry matter of the foamable mixture.

In another application, which can be combined with the previous one, a substance belonging to one or more of the following groups is added to the mixture:
a substance modifying mechanical properties of the produced objects (in particular those increasing their strength),
a substance modifying the fire and rot resistance properties of the produced objects, catalyst, or a substance functioning as an insecticide in the produced objects.

Further, various fillers, wetting agents and stabilizing agents can also be added to the mixture.

The amounts of the above described substances and components are typically about 0.01 to 25 weight-%, in particular 0.1 to 10 weight-% of the dry weight of the starting material.

According to one embodiment, desired seeds are also added to the mixture prior to the foaming. The seeds used in the invention are not in any way limited. The invention can be utilized for various seeds, such as seeds of vegetables, flowers, trees and for other corresponding seeds.

According to another embodiment, the seeds or seedlings are added to the finished porous seedbed.

In the next step 3 of the method, the formed mixture is foamed and molded into a predetermined shape.

According to one embodiment the mixture formed from the fractions resulting from the biomass fractionation is foamed prior to being fed in the mold, wherein the mold can be carefully filled and the foamed object becomes precisely mold-shaped. According to another embodiment the mixture is not foamed until in a mold. The mold can be heated to promote foam solidification, as described below.

The mixture can be foamed by any of the well-known foaming methods, such as heating, mechanical mixing, blowing gas process or saline process. Preferably, the mixture is foamed by mechanically mixing or chemically. In chemical foaming a use can be made fro example of sodium carbonate or potassium carbonate, which upon decomposition produce carbon dioxide and, alkaline part of which simultaneously serves as an activating additive. The foaming can be performed for example in a mixing tank.

In order to promote the foaming, a foaming agent, such as surface-active agent, such polysorbate, can be added to the mixture for example about 0.1 to 10 weight-% of the dry matter of the mixture.

According to preferred embodiment the foaming is carried out at normal pressure or under a slight overpressure, for example at an absolute pressure of 1.1 to 10 bar. The foaming temperature is preferably above 20 °C but below 100 °C. The reaction is exothermic i.e. without heating the foaming is better controllable and the shaping of the object is easier.

The molded foamed product has a clear, three-dimensional shape that is by no means limited. It can be for example a cube, a cone, a cylinder or a ball. According to a preferred embodiment the mold is closable. However, the mold can also be open.

The shaped porous material produced as described above is subjected to a heat treatment 4.

The formed porous material is heat treated 4 at a mild temperature to consolidate the foam. In preferred embodiment the heat treatment is carried out while the foam is still in the mold.

However, the heat treatment can also be carried out in a separate oven.

The heat treatment is carried out by heating the foamed mixture to a suitable temperature and by holding it at this temperature for a sufficient time, such as for 0.1 to 24 hours, for example 0.5 to 12 hours, always according to the composition of the formed mixture. Preferably, the heat treatment is carried out at temperature below 250 °C, for example below about 200 °C, most preferably at about 101 to 195 °C. Usually, the heat treatment is carried out at normal air pressure (about at 1 bar pressure) but of course it is also possible to be carried out at an elevated pressure, for example at an absolute pressure of about 1.1 to 10 bar.

The foam temperature should be raised at a low enough speed so that the material warms up evenly. According to one embodiment, a suitable heating rate is about 1 to 120 °C/minute, in particular the temperature is raised in the heat treatment vessel at a rate of about 5 to 50 °C/minute, for example about 10 to 30 °C/minute.

The foam object obtained from the heat treatment is suitable to be used as a seedbed as such.

However, according to one embodiment the foam object is subjected to a further processing including at least carbonization of the lignin contained in the foam object and optional activation of thus obtained product. By means of the optional carbonization and activation, for example odor-causing and other undesired components can be removed. The carbonization also reduces the fire risk of the object, while volatile components remove during the treatment, and improves mechanical properties of the object, wherein it better withstands stress and load. Activation on the other hand increases the pore volume of the object, which is a preferred property for the water retention i.e. adsorption.

According to one embodiment the temperature of the heat treated porous material is preferably lowered to a temperature of about 50 to 100 °C. The lowering of the temperature is most suitably carried out at such a slow rate that no fractures due to thermal stress occur in the carbon foam. A suitable cooling rate is about 1 to 120 °C/minute, in particular the temperature is lowered in a heat treatment vessel at a rate of about 5 to 50 °C/minute, for example about 10 to 30 °C/minute. This is typically done when the formed porous object is removed from the mold at this point for a reason that the porous heat treated object is being used as a seedbed as such, or the next optional method steps are carried out without the mold. Typically, the porous object is held in the mold also during the optional carbonization and activation if the mold is such that the gases released during the carbonization and activation are free to pass it.

In another embodiment, the heat treated porous material is directly introduced to the next process step without substantially reducing its temperature, in which process step it is carbonized and possibly activated.

According to a preferred embodiment, the carbonization 5 after the heat treatment takes place in an inert gas phase at a temperature above 500 °C, such as 500 to 1500 °C, preferably about 800 to 1000 °C. The temperature of the foam is slowly raised to the carbonization temperature. A suitable heating rate is about 1 to 120 °C/minute, in particular the temperature is raised in a heat treatment vessel at a rate of about 5 to 50 °C/minute, for example about 10 to 30 °C/minute.

The inert gas phase used in the carbonization can contain any gases which are essentially inert under the carbonization conditions. As an example of such gases a mention can be made of nitrogen, helium, carbon dioxide and argon and mixtures thereof.

According to one embodiment, also after the carbonization the temperature of the object should be lowered at a slow enough rate to prevent fractures in the object. A suitable cooling rate is about 5 to 50 °C/minute.

The optional carbonization can be carried out in a closable reactor or in an oven. Typically, such reactor or oven operates close to the atmospheric pressure or at a slight overpressure.

According to a preferred embodiment the carbonized object is activated in order to further increase its specific surface area. With the help of the present method the material is first carbonized and then activated uniformly throughout. The carbonization and activation steps also increase the mechanical resistance of the porous material.

According to one embodiment the object is chemically activated. Preferably, the chemical activation is carried out by heating the material treated with activation chemicals to a temperature of 400 to 800 °C. The activation chemicals are used to remove moisture from the material. As activation chemicals a use can be made for example of alkali salts, phosphoric acid, zinc chloride or sulfuric acid or a mixture thereof.

According to another embodiment the object is physically activated, wherein the carbon is activated by gas at a temperature of about 800 to 1100 °C. The used gas can be for example water vapor, carbon dioxide or a mixture thereof. Due to the exothermic reactions of the activation, hydrogen, carbon monoxide and carbon dioxide are removed from the material.

According to preferred embodiment the object is activated with water vapor. The external adsorption surface area of the activated material then becomes large and the structure has small pores, wherein the foam comprises mainly micropores (pores below 2 nm) and mesopores (pores of 2 to 50 nm), respectively.

According to a preferred embodiment the pore volume of the object after the activation is over 0.1 cm³/g. More preferably the pore volume of the object after the activation is over 0.2 cm³/g, for example 0.1 to 0.7 cm³/g.

According to one embodiment the carbonized porous object can further be graphitized prior to the activation of the object by heating the object to an even higher temperature of over 1500 °C. The graphitization can be used to further modify the properties of the carbon foam.

The carbonized porous seedbed is especially suitable for applications having a high fire risk and applications requiring mechanical strength, such as green walls and roofs. The activated seedbeds, in the other hand, are particularly useful in extremely dry conditions where good water retention capacity of the seedbed is particularly important.

According to one embodiment the porous object produced by the method can be washed in order to reduce possible inorganic materials. The washing can be carried out for example with water, aqueous acid, alkali or with some other solution, in particular with aqueous solution. After this, the object can be optionally dried by generally known drying methods.

According to one embodiment, impregnates i.e. additives can be added to the starting material, which impregnates further improve for example adsorption of certain substances to the material during use. The amount of such substances is typically about 0.1 to 10 weight-% of dry weight of the starting material.

Based on the above, the method according to the invention comprises in the first embodiment 1) biomass fractionation and formation of a liquid medium-containing mixture from fractions, at least some of which contains lignin, 2) subjecting the mixture in a closed mold, 3) foaming of the mixture and 4) heat treatment of the porous material in order to consolidate the foam.

In another embodiment the method according to the invention comprises 1) biomass fractionation and formation of a liquid medium-containing mixture from fractions, at least some of which contains lignin, 2) foaming of the mixture, 3) subjecting the porous material in a closed mold and 4) heat treatment of the porous material in order to consolidate the foam.

In one embodiment, the method according to either of the two preceding embodiments further comprises 5) carbonization of the consolidated foam and 6) finally optional activation of the carbonized object.

According to one embodiment an efficient energy use can be combined to the method according to the invention when the energy of the gas streams used at different process steps are utilized. Such process diagram is presented in figure 1.

According to one embodiment, the volatile fractions resulting from the carbonization step of the method according to the invention are condensed, wherein the heat energy can be recovered from those. At the same time liquid fractions are formed, which fractions can be utilized in other processes. The liquid fractions can be recovered or burned.

According to another embodiment, which can also be combined to the previous one, the volatile fractions resulting from the carbonization step and the possible non-condensable gases of the previous embodiment are burned to generate energy. The generated energy can be utilized for example in the process, heating or power generation.

According to one embodiment the recovered heat energy can be utilized in the internal heating of the process i.e. for example in the heating of the raw materials or the building. According to another embodiment the heat energy can be sold to third parties.

According to one embodiment, the carbon content of the porous carbonized object according to the present invention depends on the used starting material and temperature used in the carbonization and graphitization. According to one embodiment the carbon content of finished porous carbonized object is 50 to 100 weight-%, preferably 75 to 100 weight-%, for example 80 to 98 weight-% of the weight of the finished product.

According to one embodiment the density of the porous seedbed according to the invention is 20 to 950 g/dm³, preferably 50 to 500 g/dm³ and compressive strength is about 0.07 to 7 MPa, preferably about 0.1 to 1.0 MPa.

According to one embodiment the porous seedbed according to the invention contains at least 5 weight-% lignin, preferably 10 to 95 weight-% lignin, for example 40 to 80 weight-% lignin, calculated from the total weight.

The present invention also relates to a porous object which is produced by the method of the present invention.

In addition, the present invention generally relates to a porous, monolithic, self-standing and formed object prepared from a starting material containing lignocellulose-based lignin.

According to one embodiment, by the method according to the invention it is also possible to produce seedbeds wherein the feed of liquids and/or nutrients is integrated to the seedbed. This is done by forming inner channels to the seedbed already at its production stage, by which channels for example moisture of the seedbed and its nutrient-content can be adjusted as desired.

The seedbed can contain one or more channels, such as for example to or three channels. The direction or shape of the channels inside the seedbed is not in any way limited. According to a preferred embodiment the channels are vertical or horizontal and round in cross-section because formation of such channels in a mold is relatively simple.

According to a preferred embodiment the channels contained in the seedbed are formed in conjunction with the forming. In this case the mold includes desired channels.

Channels for conductors and spaces for sensors can also be formed in conjunction with the forming of the object, wherein the condition of the seedbed can be controlled.

According to one embodiment, intelligent and automatically controlled seedbeds can be provided by the means of the channels contained in the seedbed. Figure 2 shows an automatically controllable seedbed according to one embodiment as a diagram.

The channels (reference 6 of figure 2) contained in the seedbed can be combined to valves 7 by means of which the amount and feed of desired substances, such as various liquids and nutrients, can be controlled to the channels of the seedbed. By connecting measuring sensors 10 to the seedbed, various quantities, such as moisture, temperature and electrical and thermal conductivity, can be measured, value of which quantities can be used for optimizing the feed of liquids and nutrients.

According to one embodiment, the method uses a mold for forming inner channels to the foamed product in order to integrate the liquid and/or nutrient feed into the seedbed, preferably the liquid and/or nutrient feed is automatized based on the quantities, such as moisture, temperature and electrical and thermal conductivity, measures by the sensors.

### Examples

### Example 1

First, 100 g of water, 100 g of furfuryl alcohol and 25 g of surfactant (polysorbate) were mixed until they formed a homogeneous mixture. Thereafter, 250 g of a mixture of lignin powder and biomass and 100 g of tannin acid were added to the mixture, which after the mixture was vigorously mixed for several minutes. In the third step of the mixture formation, 50 g of gas releasing compound (potassium carbonate) was added. At this point, tomato seeds were also added to the mixture. Finally, 50 g of acid catalyst (para-toluene sulfonic acid) was added, which started a reaction and foaming.

After the foaming was stabilized, the mixture was placed in a mold and transferred to an oven for consolidation of the foam. The foam was kept in the oven for 1200 minutes at a temperature of 105 °C. After the consolidation, the temperature was lowered to room temperature and the finished porous seedbed was removed from the mold.

### Industrial Applicability

The method according to the invention can be utilized for production of various porous formable seedbeds and the seedbed produced by the method can be generally used as a seedbed for various seeds. The seedbed can be used as such or it can be utilized as a starting material in other processes.

The porous seedbed of the invention has the benefit of fluffiness, small particle size and non-toxicity. Integration of nutrients and watering is also possible in such seedbed.

The invention is not intended to be limited to the exemplary embodiments set forth above, on the contrary, it is intended to be broadly construed within the scope defined by the following claims.

### Reference Numbers

- 1: biomass fractionation
- 2.: mixing
- 3.: foaming and forming
- 4.: heat treatment
- 5.: carbonization and activation
- 6.: channel
- 7.: valve
- 8.: controller
- 9.: supply pipe
- 10.: measuring sensor
- 11.: conductor
- 12.: meter

### Reference Publications

Patent Literature
JPH06113669

## Claims

1. A method for producing porous seedbeds from a lignocellulose-based starting material,
**characterized in that**
- a mixture containing liquid medium is formed from lignin-containing fraction obtained from biomass fractionation,
- other fractions obtained from the biomass fractionation are optionally added to the mixture,
- the mixture is foamed and brought to a predetermined form by means of a mold, and
- thus obtained formed mixture is subjected to a heat treatment in order to solidify the foam,
wherein the mixture formed of the fraction(s) of the biomass contains 10 to 80 weight-% of lignin calculated from the dry weight of the mixture and,
wherein plant growth promoting components are added to the mixture prior to the foaming of the mixture.

2. The method according to claim 1, **characterized in that** the mixture is foamed prior to feeding into the mold.

3. The method according to claim 1 or 2, **characterized in that** the liquid medium is water, organic solution or ionic solution or any mixture thereof.

4. The method according to any of the preceding claims, **characterized in that** the mixture is foamed by mechanically mixing or chemically.

5. The method according to any of the preceding claims, **characterized in that** the mixture is foamed at an absolute pressure of 0.1 to 10 bar and at a temperature below 100 °C, preferably at normal pressure and at room temperature.

6. The method according to any of the preceding claims, **characterized in that** an open or closable mold is used in the method, in which mold the foamed product is formed into a three-dimensional seedbed which is for example a cube, a cone, a cylinder, or a ball.

7. The method according to any of the preceding claims, **characterized in that** a mold, by means of which inner channels can be provided into the foamed product, is used in the method.

8. The method according to any of the preceding claims, **characterized in that** the porous material is heat treated below 250 °C, preferably under 200 °C, more preferably at 75 to 150 °C, in order to consolidate the foam.

9. The method according to any of the preceding claims, **characterized in that** the heat treatment is carried out in the mold, in particular the heat treatment is carried out in the mold where the foam object is formed, without removing the object from the mold.

10. The method according to any of the preceding claims, **characterized in that** the foam object obtained from the heat treatment is carbonized and optionally activated, wherein the pore volume of the object is preferably over 0.1 cm³/g.

11. The method according to any of the preceding claims, **characterized in that** the mixture contains 20 to 50 weight-% of lignin, calculated form the dry weight of the mixture.

12. The method according to any of the preceding claims, **characterized in that** the lignin-containing fraction is obtained by treating biomass, such as wood, annual or perennial plants, with aqueous solution containing lignin dissolution promoting agents, such as alkali, or organic or ionic solvent.

13. The method according to any of the preceding claims, **characterized in that** the plant growth promoting components are added to the mixture in an amount of 0.01 to 70 weight-% of the dry matter of the foamable mixture, typically 0.05 to 30 weight-%, for example 0.1 to 15 weight-% of the dry matter of the foamable mixture, wherein the plant promoting components are preferably nutrients, such as inorganic or organic fertilizer components, or minerals or trace elements, such as manganese, boron, copper or selenium, or mixtures thereof.

14. A porous seedbed produced by the method according to any of the preceding claim.

15. A porous, monolithic, self-standing and formed seedbed produced from a starting material containing lignocellulose-based lignin, which seedbed comprises at least 5 weight-%, preferably 10 to 95 weight-%, for example 40 to 80 weight-%, lignin calculated from the total weight.

## Patentansprüche

1. Erzeugungsverfahren für poröse Saatbetten aus einem Ausgangsmaterial auf Basis von Lignocellulose, **dadurch gekennzeichnet, dass**
- ein Gemisch, welches flüssiges Medium enthält, aus ligninhaltiger Fraktion gebildet wird, welche aus Biomassefraktionierung erhalten wurde,
- dem Gemisch optional weitere aus der Biomassefraktionierung erhaltene Fraktionen zugesetzt werden,
- das Gemisch aufgeschäumt und mittels einer Gussform in eine vorbestimmte Form gebracht wird, und
- so erhaltenes geformtes Gemisch einer Wärmebehandlung unterzogen wird, um den Schaum zu verfestigen,
wobei das aus der/den Fraktion(en) der Biomasse gebildete Gemisch 10 bis 80 Gew.-% Lignin enthält, berechnet auf das Trockengewicht des Gemisches, und
wobei dem Gemisch vor dem Aufschäumen des Gemischs pflanzenwachstumsfördernde Komponenten zugesetzt werden.

2. Verfahren nach Anspruch 1, **dadurch gekennzeichnet, dass** das Gemisch vor dem Einfüllen in die Form aufgeschäumt wird.

3. Verfahren nach Anspruch 1 oder 2, **dadurch gekennzeichnet, dass** das flüssige Medium Wasser, eine organische Lösung oder eine ionische Lösung oder ein beliebiges Gemisch davon ist.

4. Verfahren nach einem der vorstehenden Ansprüche, **dadurch gekennzeichnet, dass** das Gemisch durch mechanisches Mischen oder chemisch aufgeschäumt wird.

5. Verfahren nach einem der vorstehenden Ansprüche, **dadurch gekennzeichnet, dass** das Gemisch bei einem absoluten Druck von 0,1 bis 10 bar und bei einer Temperatur unter 100 °C, bevorzugt bei Normaldruck und Raumtemperatur, aufgeschäumt wird.

6. Verfahren nach einem der vorstehenden Ansprüche, **dadurch gekennzeichnet, dass** bei dem Verfahren eine offene oder verschließbare Form verwendet wird, in welcher das aufgeschäumte Produkt zu einem dreidimensionalen Saatbett geformt wird, welches beispielsweise ein Würfel, ein Kegel, ein Zylinder oder eine Kugel ist.

7. Verfahren nach einem der vorstehenden Ansprüche, **dadurch gekennzeichnet, dass** bei dem Verfahren eine Form verwendet wird, mit deren Hilfe innere Kanäle in das aufgeschäumte Produkt eingebracht werden können.

8. Verfahren nach einem der vorstehenden Ansprüche, **dadurch gekennzeichnet, dass** das poröse Material zur Verfestigung des Schaums bei unter 250 °C, bevorzugt unter 200 °C, bevorzugter bei 75 bis 150 °C wärmebehandelt wird.

9. Verfahren nach einem der vorstehenden Ansprüche, **dadurch gekennzeichnet, dass** die Wärmebehandlung in der Gussform durchgeführt wird, insbesondere dass die Wärmebehandlung in der Gussform durchgeführt wird, in welcher das Schaumobjekt gebildet wird, ohne das Objekt aus der Gussform zu entfernen.

10. Verfahren nach einem der vorstehenden Ansprüche, **dadurch gekennzeichnet, dass** das aus der Wärmebehandlung erhaltene Schaumobjekt karbonisiert und optional aktiviert wird, wobei das Porenvolumen des Objekts bevorzugt über 0,1 cm³/g liegt.

11. Verfahren nach einem der vorstehenden Ansprüche, **dadurch gekennzeichnet, dass** das Gemisch 20 bis 50 Gew.-% Lignin enthält, berechnet auf das Trockengewicht des Gemischs.

12. Verfahren nach einem der vorstehenden Ansprüche, **dadurch gekennzeichnet, dass** die ligninhaltige Fraktion durch Behandlung von Biomasse, wie Holz, einjährigen oder mehrjährigen Pflanzen, mit einer wässrigen Lösung erhalten wird, die Mittel zur Förderung einer Ligninauflösung enthält, wie beispielsweise Alkali oder organische oder ionische Lösungsmittel.

13. Verfahren nach einem der vorstehenden Ansprüche, **dadurch gekennzeichnet, dass** die pflanzenwachstumsfördernden Komponenten des Gemischs dem Gemisch in einer Menge von 0,01 bis 70 Gew.-% der Trockenmasse des schäumbaren Gemischs, typischerweise 0,05 bis 30 Gew.-%, beispielsweise 0,1 bis 15 Gew.-% der Trockenmasse des schäumbaren Gemischs, zugesetzt werden, wobei es sich bei den pflanzenfördernden Komponenten bevorzugt um Nährstoffe, wie anorganische oder organische Düngemittelkomponenten, oder Mineralstoffe bzw. Spurenelemente, wie Mangan, Bor, Kupfer oder Selen, oder um Gemischen davon handelt.

14. Poröses Saatbett, welches durch das Verfahren nach einem der vorstehenden Ansprüche hergestellt wird.

15. Poröses, monolithisches, selbststehendes und geformtes Saatbett, hergestellt aus einem Ausgangsmaterial, welches Lignin auf Basis von Lignocellulose enthält, wobei das Saatbett zumindest 5 Gew.-%, bevorzugt 10 bis 95 Gew.-%, zum Beispiel 40 bis 80 Gew.-%, Lignin, berechnet auf das Gesamtgewicht umfasst.

## Revendications

1. Procédé de production de lits de semences poreux à partir d'une matière première à base de lignocellulose, **caractérisé en ce que**
- un mélange contenant un milieu liquide est formé à partir d'une fraction contenant de la lignine obtenue à partir du fractionnement d'une biomasse,
- d'autres fractions obtenues à partir du fractionnement de la biomasse sont facultativement ajoutées au mélange,
- le mélange est transformé en mousse et amené à une forme prédéterminée au moyen d'un moule, et
- le mélange formé ainsi obtenu est soumis à un traitement thermique afin de solidifier la mousse,
dans lequel le mélange formé de la ou des fractions de la biomasse contient 10 à 80 % en poids de lignine, calculé à partir du poids sec du mélange, et
dans lequel des composants favorisant la croissance des plantes sont ajoutés au mélange avant la formation de mousse dans le mélange.

2. Procédé selon la revendication 1, **caractérisé en ce que** le mélange est transformé en mousse avant d'être introduit dans le moule.

3. Procédé selon la revendication 1 ou 2, **caractérisé en ce que** le milieu liquide est de l'eau, une solution organique ou une solution ionique ou tout mélange de celles-ci.

4. Procédé selon l'une quelconque des revendications précédentes, **caractérisé en ce que** le mélange est transformé en mousse par mélange mécanique ou chimiquement.

5. Procédé selon l'une quelconque des revendications précédentes, **caractérisé en ce que** le mélange est transformé en mousse à une pression absolue allant de 0,1 à 10 bars et à une température inférieure à 100 °C, de préférence à pression normale et à température ambiante.

6. Procédé selon l'une quelconque des revendications précédentes, **caractérisé en ce qu'**un moule ouvert ou pouvant être fermé est utilisé dans le procédé, dans lequel moule le produit sous forme de mousse est formé en un lit de semence tridimensionnel qui est, par exemple, un cube, un cône, un cylindre ou une boule.

7. Procédé selon l'une quelconque des revendications précédentes, **caractérisé en ce qu'**un moule, au moyen duquel des canaux internes peuvent être prévus dans le produit sous forme de mousse, est utilisé dans le procédé.

8. Procédé selon l'une quelconque des revendications précédentes, **caractérisé en ce que** le matériau poreux est traité thermiquement à une température inférieure à 250 °C, de préférence inférieure à 200 °C, plus préférentiellement de 75 à 150 °C, afin de consolider la mousse.

9. Procédé selon l'une quelconque des revendications précédentes, **caractérisé en ce que** le traitement thermique est effectué dans le moule, en particulier le traitement thermique est effectué dans le moule où l'objet en mousse est formé, sans retirer l'objet du moule.

10. Procédé selon l'une quelconque des revendications précédentes, **caractérisé en ce que** l'objet en mousse obtenu à partir du traitement thermique est carbonisé et facultativement activé, dans lequel le volume des pores de l'objet est de préférence supérieur à 0,1 cm³/g.

11. Procédé selon l'une quelconque des revendications précédentes, **caractérisé en ce que** le mélange contient de 20 à 50 % en poids de lignine, calculé à partir du poids sec du mélange.

12. Procédé selon l'une quelconque des revendications précédentes, **caractérisé en ce que** la fraction contenant de la lignine est obtenue en traitant de la biomasse, telle que du bois, des plantes annuelles ou pérennes, avec une solution aqueuse contenant des agents favorisant la dissolution de la lignine, tels qu'un alcali ou un solvant organique ou ionique.

13. Procédé selon l'une quelconque des revendications précédentes, **caractérisé en ce que** les composants favorisant la croissance des plantes sont ajoutés au mélange en une quantité allant de 0,01 à 70 % en poids de la matière sèche du mélange moussant, habituellement allant de 0,05 à 30 % en poids, par exemple de 0,1 à 15 % en poids de la matière sèche du mélange moussant, dans lequel les composants favorisant la croissance des plantes sont de préférence des nutriments, tels que des composants d'engrais inorganiques ou organiques, ou des minéraux ou des oligo-éléments, tels que le manganèse, le bore, le cuivre ou le sélénium, ou des mélanges de ceux-ci.

14. Lit de semence poreux produit par le procédé selon l'une quelconque des revendications précédentes.

15. Lit de semence poreux, monolithique, autoportant et formé produit à partir d'une matière première contenant de la lignine à base de lignocellulose, lequel lit de semence comprend au moins 5 % en poids, de préférence de 10 à 95 % en poids, par exemple de 40 à 80 % en poids, de lignine, calculée à partir du poids total.
